# EUROPEAN PATENT SPECIFICATION

(11) **EP 4 474 183 B1**
(45) Date of publication and mention of the grant of the patent: **27.05.2026**
(21) Application number: 24180565.4
(22) Date of filing: 06.06.2024
(51) Int. Cl.: B60J 1/20

(54) **COMMERCIAL VEHICLE COMPRISING A CURTAIN**
NUTZFAHRZEUG MIT EINEM VORHANG
VÉHICULE UTILITAIRE COMPRENANT UN RIDEAU

(30) Priority: 07.06.2023 NL 2035019
(43) Date of publication of application: 11.12.2024
(73) Proprietor: DAF Trucks N.V., 5643 TW Eindhoven (NL)
(72) Inventor: LANDMAN, Karsten Wietze, 5643 TW Eindhoven (NL)
(74) Representative: V.O.

(56) References cited:
- EP-A1- 3 929 009
- US-A1- 2010 045 062
- US-A1- 2014 326 418

## Description

The invention relates to a commercial vehicle comprising a surveillance system with a display device for displaying recorded images of an area adjacent to the vehicle, and a curtain arranged for occluding windows of the vehicle's cabin.

In commercial vehicles, such as trucks or buses, a curtain or other type of darkening device may be used for reducing the amount of stray light entering the vehicle's interior. For example, when parked, the vehicle's windows may be occluded by the darkening device to provide a private environment inside the vehicle, e.g. suitable for resting or watching a film.

However, some commercial vehicles are equipped with a surveillance system including one or more cameras for recording the vehicle's surroundings, and a display device inside the vehicle for displaying the recordings to the driver and providing an alarm signal, e.g. for monitoring suspicious activity around the vehicle and responding accordingly. For example, in case of a tractor semi-trailer combination, while resting on a parking lot the driver may desire to regularly keep an eye on the trailer to prevent burglary. When the vehicle is equipped with a darkening device, the display device should remain visible to the driver while the amount of stray light entering the cabin is minimized.

EP3929009 describes a darkening device that, in the closed position, is configured to obscure the cabin and to cover the display device. However, since the darkening device goes over the display device, the darkening device does not prevent stray light from entering the cabin while the display device is visible.

These and other known darkening devices may be specifically tailored for obscuring a single cabin configuration. Since cabin configurations commonly vary, e.g. a left or right hand drive cabin or a cabin provided with a different type of display device, multiple types of darkening device would have to be available to cover a range of cabin configurations.

It is an object of the present invention to minimize the amount of stray light entering the cabin regardless of the cabin configuration, while objects inside the cabin, such as a display device, remain visible to the driver.

### SUMMARY

In summary, the invention pertains to a commercial vehicle, comprising a curtain, suspended inside a cabin of the vehicle and movable between a closed position, in which the curtain obscures a window of the cabin, and an open position, in which the window is substantially cleared from the curtain. The curtain comprises a first section and a second section that are overlappingly interconnected at a hem of the curtain, thereby forming an overlap section that extends substantially perpendicular to the hem.

The overlap section comprises a cutout dimensioned for circumferentially extending around a display device mounted near the window. In the closed position of the curtain, the cutout is adjustable to match a position and size of the display device between a neutral state, in which an area of the overlap section is maximized, and an extended state, in which the area of the overlap section is minimized.

The curtain comprises one or more elastic elements mounted between the first and second section and configured to provide a biasing force across the overlap section, for biasing the cutout toward the neutral state while circumferentially abutting the display device.

Accordingly, when the curtain is circumferentially draped around the display device in the closed position of the curtain, the amount of (stray) light coming in through the window around the display device is limited, regardless of the size and position of the display device. As a result, while the cabin is fully obscured, the driver of the vehicle can e.g. watch images on the display device. The display device can for example be coupled to a surveillance system for monitoring the vehicle's surroundings, e.g. on a parking lot. Instead of a display device, other objects or structures inside the cabin can be circumferentially draped. Conversely, the amount of light that exits the cabin is also limited, as well as the possibility to peek inside the cabin from the outside of the vehicle.

The adjustable cutout, and associated one or more elastic elements, allow easy draping of the curtain to fit snugly around the contour of the display device to limit the amount of stray light in a reliable fashion, regardless of the size and position of the display device, without requiring additional covers and without requiring laborious connection methods, e.g. involving connectors such as push buttons, Velcro or magnets.

By having a cutout that is adjustable both in position as well as in size, a single curtain design can be applied to provide a darkening device suitable for obscuring various cabin types and configurations. The simplicity of the present invention also allows it to be applied to different types of darkening devices.

In some embodiments, the cutout is provided between the hem and the one or more elastic elements. In this way, an improved circumferential fit of the adjustable cutout around the display device can be provided, since the overlap section is constrained by connections on opposing sides of the cutout.

In other or further embodiments, the cutout extends from the overlap section towards the first section and/or the second section, e.g. along a forward direction of the vehicle substantially parallel to the hem. As a result, the position of the cutout with respect to the hem, as well as the size of the cutout, can be adjusted over a relatively large range. For example, when the cutout extends from towards the first and/or second section along the forward direction, the curtain can be draped around display devices located across a range of positions along the forward direction, while the cutout can still be adjusted in size to abut the outer contour of the display device.

In a preferred embodiment, at least one elastic element that extends between the first and second section on a first side of the curtain, e.g. a side of the curtain facing the exterior side of the cabin. This provides a simple yet reliable solution for draping a display device with limited stray light.

In one variant, the curtain comprises a first flap that extends from the first section across the second section and that covers the overlap section on the first side of the curtain, e.g. in both the neutral state as well as in the extended state of the cutout, and the at least one elastic element is mounted between the first flap and the second section. For example, the first flap extends across the overlap section adjacent to the cutout, e.g. along a top side of the cutout between the cutout and the hem, or along a bottom side opposite the top side. The first flap thus provides extra curtain material, e.g. fabric, to further minimalize the amount of stray light. Preferably, the first flap is arranged for covering an area of the overlap section adjacent to the cutout. The first flap can be modelled to the shape of the area it needs to close off.

In other or further variants, at least one further elastic element extends between the first and second section on a second side of the curtain, opposite the first side. This results in a symmetric design that improves the obscuring properties of the curtain while providing an even more reliable circumferential fit around the display device.

To further minimalize the amount of stray light able to pass along the curtain and/or the display device, the curtain may comprise a second flap that extends from the second section across the first section and that covers the overlap section on the second side of the curtain, e.g. in both the neutral state as well as in the extended state of the cutout, and the at least one further elastic element is mounted between the second flap and the first section. Preferably, the second flap is configured to cover an area of the overlap section adjacent to the cutout. The second flap can also be modelled to the shape of the area it needs to close off.

In some embodiments, the curtain comprises an upper portion and a lower portion that are overlappingly interconnected across the cutout for thereby forming an additional overlap section that extends substantially parallel to the hem.

The overlap section, and/or the additional overlap section, can e.g. be formed by a pleat of the curtain. Accordingly, the overlap section does not allow passage of light, e.g. between the first and second section, regardless of the cutout being in the neutral state or in the extended state.

Preferably, the first and second section are made of a substantially non-elastic fabric. The light permeability of a material, such as a fabric, may vary with the degree of expansion or contraction of the material, due to variations in thickness. Since the one or more elastic elements already provide elasticity to snugly drape the curtain around display devices of various sizes and at various positions, other parts of the curtain can be made of a different material, e.g. specifically selected for its light obscuring or reflecting properties.

In some embodiments, measured from the hem, the first section has a first length and the second section has a second length, wherein the second length is longer than the first length. Accordingly, the curtain is tailored to the cabin configuration. For example, extended length of the second section can be used to cover a lower window, e.g. in a door of the cabin.

In yet other or further embodiments, the curtain comprises a third section that is connected to the hem and that extends across the first and second section. Accordingly, additional curtain material is connected to the hem, to provide an extra layer across the first and second section. The additional layer can e.g. comprise an isolating and/or sun light reflecting fabric or other type of material.

In some embodiments, the commercial vehicle further comprises a surveillance system, wherein the surveillance system comprises one or more camera devices mounted to an exterior side of the cabin and arranged for recording images of an area adjacent to the vehicle, and wherein the display device is arranged for displaying the images recorded by the one or more camera devices.

Accordingly, in the closed position of the curtain, objects or people that are present in the area adjacent to the vehicle can be made visible for the driver or passenger on the display inside the cabin, while fully obscuring the cabin, without additional (stray) light coming in through the window around the display device, regardless of the size and position of the display device.

### BRIEF DESCRIPTION OF THE DRAWINGS

The invention will be further elucidated in the figures:
FIG 1 illustrates an embodiment of a commercial vehicle comprising a curtain;
FIG 2 illustrates an embodiment of the curtain described herein;
FIG 3 provides a top view of an embodiment of the curtain described herein;
FIG 4 illustrates another or further embodiment of the curtain described herein, comprising a flap;
FIG 5 illustrates another or further embodiment of the curtain described herein, comprising a top and bottom section;
FIG 6 illustrates yet another or further embodiment of the curtain described herein, comprising a third section.

### DETAILED DESCRIPTION

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

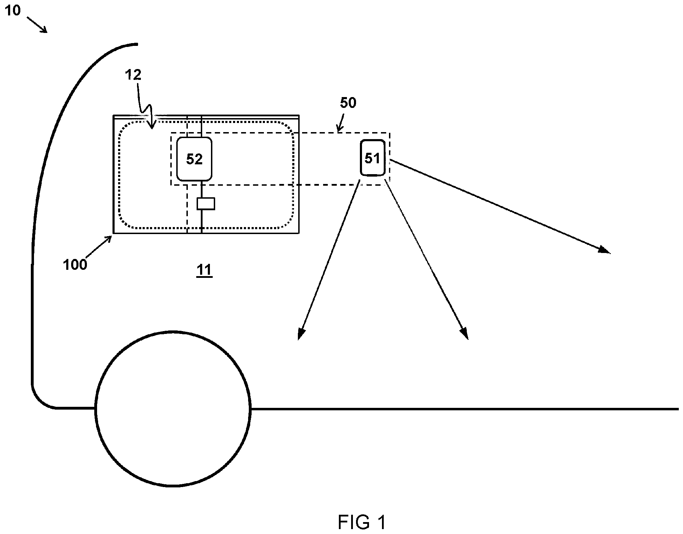

FIG 1 illustrates an embodiment of a commercial vehicle 10, such as a bus or truck, comprising a cabin 11 and a curtain 100 for obscuring a window 12 of the cabin. In this example, the vehicle 10 is equipped with a surveillance system 50, e.g. for monitoring the surroundings of the vehicle 10. For a tractor semi-trailer combination, the surveillance system 50 can e.g. be directed to monitoring the trailer, to prevent burglary or theft of cargo when the vehicle 10 is parked. As illustrated, the surveillance system 50 comprises a camera device 51 that is mounted to an exterior side of the cabin 11 of the vehicle 10. The surveillance system 50 may comprise more than one camera device 51, e.g. on the left and right hand side of the cabin 11, and/or on the front and rear side of the cabin 11. The one or more camera devices 51 are arranged for recording images of an area adjacent to the vehicle 10, e.g. the vehicle's surroundings. A display device 52 of the surveillance system 50 is mounted to an interior side of the cabin 11 near a window 12 and arranged for displaying the images recorded by the one or more camera devices 51. In this way, images of the area adjacent to the vehicle 10 can be displayed to the driver, e.g. to monitor the vehicle's surroundings. Additionally, an alarm signal can be triggered when activity is recorded in the adjacent area. For example, a light or sound may be generated, e.g. by the display device, to indicate the presence of a person near the vehicle when it is parked.

To create a private environment inside the cabin 11, e.g. for resting the driver, a curtain 100 is provided on the interior side of the cabin 11. To obscure the cabin 11 the curtain or darkening device 100 is movable between a closed position in which the curtain 100 obscures the window 12 of the cabin 11, and an open position in which the window 12 is substantially cleared from the curtain. For example, the curtain or darkening device 100 may comprise one or more layers (e.g. sheets) of material that are slidable along a rail, which e.g. is suspended above the window and extends along the driving direction of the vehicle. Alternatively, the curtain or darkening device 100 may comprise roman blinds or roller blinds, including one or more layers that can be folded or rolled up and out, respectively, e.g. from a side of the window.

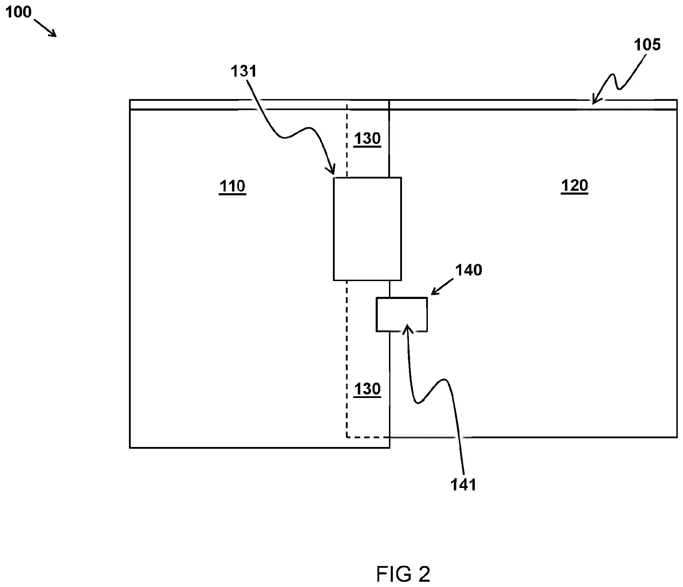

As illustrated in FIG 2, the curtain 100 comprises a first section 110 and a second section 120 that are overlappingly interconnected at a hem 105 of the curtain 100. The hem 105 is e.g. provided along an edge of the curtain 100, such as a top or bottom edge or a left or right edge. By the overlapping connection between the first and second section 110, 120 an overlap section 130 is formed that extends substantially perpendicular to the hem 105, e.g. substantially horizontal along a driving direction of the vehicle, or substantially vertical perpendicular to the driving direction. The first and second section 110, 120 can e.g. be separate pieces of material, that are overlappingly connected. Instead, the curtain 100 may comprise a single layer that defines the first and second section 110, 120 as well as the overlap section 130, e.g. by a fold or pleat of the curtain 100. As such, the fold or pleat provides the overlap section 130 between the first and second section 110, 120. Although, for clarity, the first and second section 110, 120 are illustrated in the Figures with different lengths and/or widths, this is not intended to be limiting for the present invention, since sections of the curtain may be of any size.

The curtain 100 can be made of any material suitable for darkening the cabin and that can be rolled, folded, or moved in front of a window to obscure the cabin, and away from the window to allow (day)light to enter the cabin. The curtain material may be coated to provide additional properties such as light or heat insulation or reflectance. For example, the material includes a (coated) fabric, a polymer, and/or a metal layer. Preferably, the first and second section 110, 120 are made of a substantially non-elastic (yet pliable) material, such as a fabric (e.g. knit, woven or nonwoven).

The overlap section 130 comprises a cutout 131 dimensioned for circumferentially extending around the display device. For example, the display device comprises an outer contour and the cutout 131 is equal to or larger than the outer contour of the display device. The cutout may be suitable to fit around an outer contour of a series of display devices, having a size ranging from small to large, by dimensioning the cutout to fit around the largest display device. For example, the cutout 131 extends from the overlap section 130 towards the first section and/or the second section. In this way, the curtain 100 can be draped over and around various types of display device. Alternatively, instead of a display device, the cutout may be dimensioned to fit around other types of devices or objects. Also, instead of a single display device, the vehicle may comprise more than one display device or other type of object, and the curtain may comprise multiple cutouts for circumferentially extending around the multiple display devices or other objects.

Since the cutout 131 extends across the overlap section 130, and is thus folded or split, the cutout 131 is adjustable between a neutral state, in which an area of the overlap section 130 is maximized, and an extended state, in which the area of the overlap section 130 is minimized. By increasing the amount of overlap between the first and second section 110, 120, the effective dimensions of the cutout are decreased. Vice versa, the effective dimensions of the cutout 131 are increased by reducing the amount of overlap between the first and second section 110, 120. In this way, the position and size of the cutout 131 are adjustable to match a position and size of the display device. When the area of the overlap section 130 is at a maximum, in the neutral state, the effective dimensions of the cutout 131 are preferably smaller than the size of the display device. In other words, the size and/or position of the cutout 131 must be at least slightly adjusted, e.g. increased or displaced, to fit around the display device, which means that after draping the curtain 100 over and around the display device, the overlap between the first and second section 110, 120 is reduced.

Since the first and second section 110, 120 are overlappingly connected, e.g. by a seam, the overlap section 130 and cutout 131 may be biased toward the neutral state, e.g. due to gravity. However, to ensure that, when the curtain is draped over and around the display device, the cutout 131 circumferentially abuts the outer contour of the display device in a tight fashion, to minimize the amount of stray light passing between the curtain and the display device, the curtain 100 is provided with a biasing mechanism 140 for biasing the dimensions of the cutout 131 to circumferentially fit to the display device. The biasing mechanism 140 comprises an elastic element 141 that is mounted between the first and second section 110, 120 on a side of the curtain facing the cabin interior, or exterior. Alternatively, more than one elastic element 141 may be mounted between the first and second section 110, 120, e.g. on one or both sides of the curtain.

The one or more elastic elements 141 are configured to provide a biasing force across the overlap section 130. For example, the one or more elastic elements are made of a stretchable material, so that each elastic element can be stretched by elastic deformation from its original length to an extended length. The extended length is at least 10% larger than the original length, preferably at least 30% or 50% larger, and may be up to 200% or 300% of the original length. In this way, the cutout 131 is biased toward the neutral state while circumferentially abutting the display device. Thus, when draping the curtain 100 over and around the display device, thereby reducing the overlap between the first and second section 110, 120, an external force is to be applied between the first and second section 110, 120 to stretch the one or more elastic elements 141 and increase the biasing force.

As illustrated in FIG 2 the cutout 131 can be provided between the hem 105 and the biasing mechanism 140. In this way, the biasing force of the one or more elastic elements 141 is applied on a side of the cutout 131 opposite to the hem 105, at which the first and second section 110, 120 are overlappingly interconnected. As a result, the cutout 131 is tightly pressed against the outer contour of the display device. However, alternatively or additionally, the biasing mechanism 140 comprises one or more elastic elements that extend across the cutout 131, or between the cutout 131 and the hem 105. These variants may provide alternative or additional ways of ensuring that the cutout 131 tightly abuts the display device.

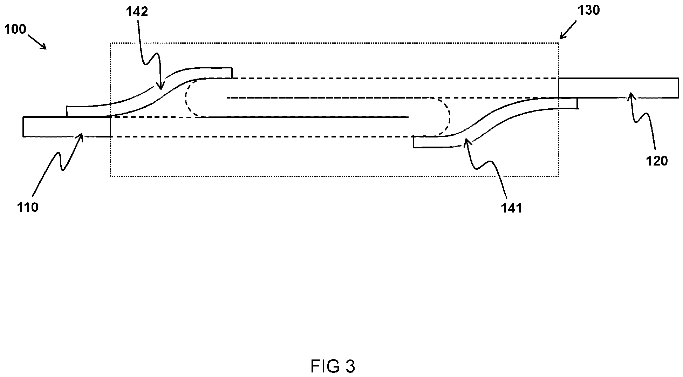

FIG 3 illustrates a top view of an embodiment of the curtain 100, in which the overlap section 130 is formed by a pleat, or fold, of the curtain. In other words, the first section 110 and second section 120 are two complementary parts of a single sheet, which is folded to provide the overlap section 130. This configuration prevents passage of light between the first and second section 110, 120, since the gap between them is constrained and covered by the width of the overlap section. Two elastic elements 141, 142 are mounted between the first and second section 110, 120, one on either side of the curtain.

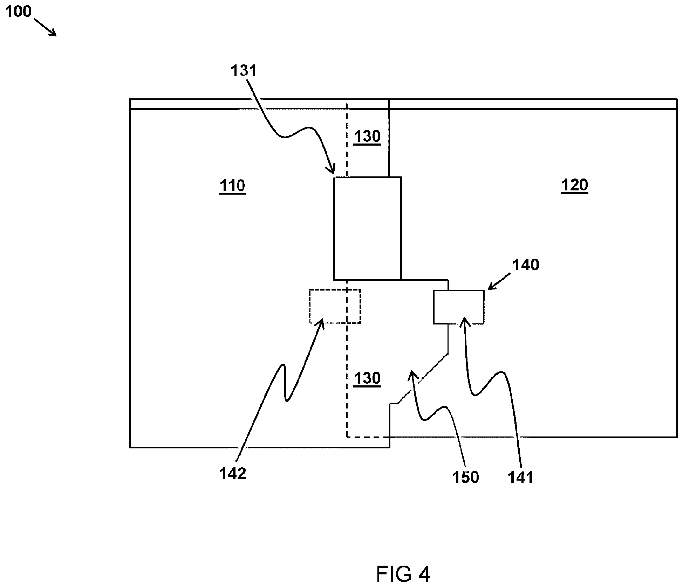

Alternatively, instead of a folded or pleated curtain, the first and second section 110, 120 may be separate parts that overlap over an area, and the overlap section 130 is formed by the area of overlap between the separate first and second section 110, 120. To prevent that a gap is created between the first section 110 and second section 120, e.g. due to creases, the curtain 100 may comprise a flap 150 that extends from the first section 110 across the second section 120, as illustrated in FIG 4. The flap 150 provides an additional overlap section on one side of the curtain, e.g. facing the cabin exterior. The elastic element 141 is mounted between the first flap 151 and the second section 120. Accordingly, the flap 150 additionally covers the overlap section 130 to prevent light passing between the first and second section 110, 120.

The biasing mechanism 140 may comprise at least one further elastic element 142 that extends between the first and second section 110, 120 on a second side of the curtain 100, opposite the first side, both in the pleated curtain configuration as shown in FIG 3, as well as in the separated configuration depicted in FIG 4. This provides a symmetrical double-sided design, that enhances the reliability of the circumferential abutment between the cutout 131 and the display device, regardless of the curtain being used in right hand drive cabins or left hand drive cabins.

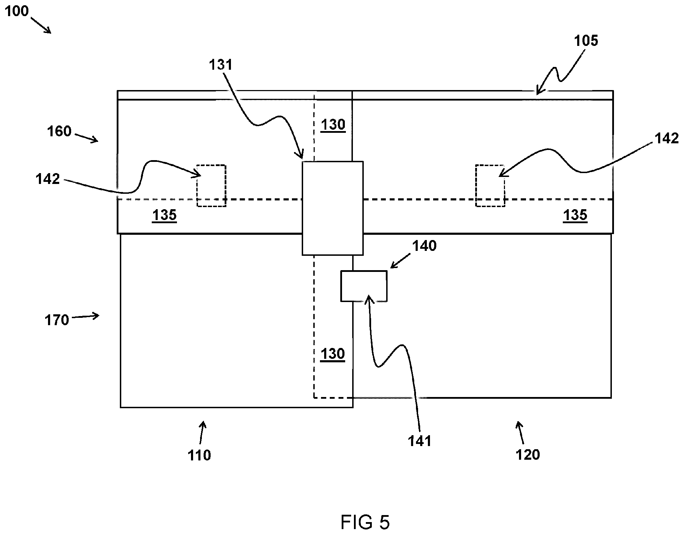

FIG 5 illustrates another or further embodiment of the curtain 100. In addition to the first and second section 110, 120, the curtain 100 comprises an upper portion 160 and a lower portion 170 that are overlappingly interconnected across the cutout 131. As a result, an additional overlap section 135 is formed that extends substantially parallel to the hem 105. Thus, the cutout 131 is adjustable in a second direction, e.g. perpendicular to the hem 105, to match a position and size of the display device between a neutral state, in which an area of the additional overlap section 135 is maximized, and an extended state, in which the area of the overlap section 135 is minimized. The biasing arrangement may comprise one or more further elastic elements 142 that extend between the upper portion 160 and the lower portion 170 across the additional overlap section 135, e.g. on the second side of the curtain 100 as illustrated in FIG 5, to provide a biasing force across the additional overlap section 135, e.g. along the second direction, for biasing the cutout 131 toward the neutral state while circumferentially abutting the display device.

This improves the adjustability of the cutout 131 by providing an additional direction of adjustment, e.g. perpendicular to the hem 105. As such, larger variations in position and size of the display device can be accommodated.

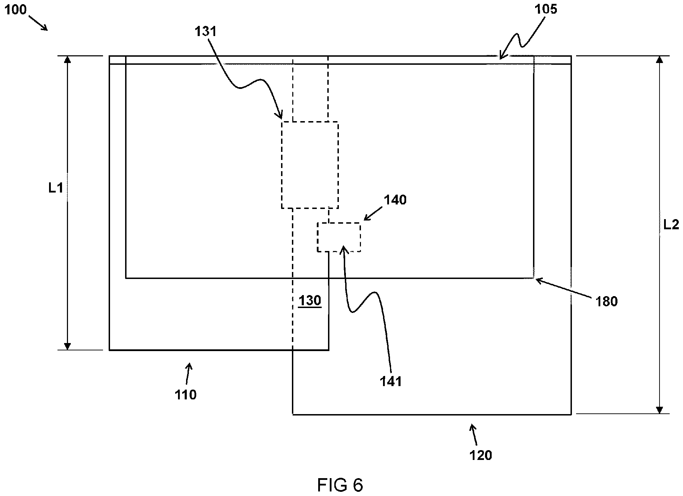

As illustrated in FIG 6, the curtain 100 may further comprise a third section 180 that is connected to the hem 105 and that extends across the first and second section 110, 120, e.g. to cover the cutout 131, or the cutout 131 and the one or more elastic elements 141 of the biasing mechanism 140. Also, in this way, extra material can be added to the curtain, e.g. for providing additional layers of light reflecting or absorbing material and/or heat insulation. Also, as illustrated in FIG 6, the curtain 100 may comprise first and second sections 110, 120 of sizes or lengths that are different to each other. For example, measured from the hem 105, e.g. in a direction perpendicular to the hem 105, the first section 110 may have a first length L1 and the second section 120 may have a second length L2 that is longer than the first length L1. Alternatively to the depicted embodiment, the length of the first section 110 may be longer than the length of the second section 120. The section with the second length L2 can thus for example be arranged to cover a lower window of the cabin. Also, the respective widths of the first and second section 110, 120 may be different from each other, and instead of straight edges the sections 110, 120 may comprise profiled or curved edges. As would be understood by the skilled person, the first and second section 110, 120 can be tailored in other outlines than illustrated herein to obscure a range of cabin configurations.

The invention applies not only to commercial vehicle applications where the curtain fits around a display device, but also to other technical, agricultural or industrial applications where a curtain is used. Also, instead of a display device of a surveillance system, the curtain can be arranged to fit around any other type of device or object. For example, the curtain described herein can be draped over and around a structural feature, to secure the curtain in the closed or open position. It will be clear to the skilled person that the invention is not limited to any embodiment herein described and that modifications are possible which may be considered within the scope of the appended claims. In the claims, any reference signs shall not be construed as limiting the claim.

The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention as long as the scope of the invention as defined by the claims is not changed.

Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extent that structure, material, or acts are considered to be essential they are inexpressively indicated as such.

## Claims

1. A commercial vehicle (10), comprising a curtain (100) suspended inside a cabin (11) of the vehicle and movable between a closed position, in which the curtain (100) obscures a window (12) of the cabin, and an open position, in which the window (12) is substantially cleared from the curtain (100);
**characterised in that** the curtain (100) comprises a first section (110) and a second section (120) that are overlappingly interconnected at a hem (105) of the curtain, thereby forming an overlap section (130) that extends substantially perpendicular to the hem (105);
wherein the overlap section (130) comprises a cutout (131) dimensioned for circumferentially extending around a display device (52) mounted near the window (12);
wherein the cutout (131) is adjustable to match a position and size of the display device (52) between a neutral state, in which an area of the overlap section (130) is maximized, and an extended state, in which the area of the overlap section (130) is minimized;
wherein the curtain (100) comprises one or more elastic elements (141) mounted between the first (110) and second section (120) and configured to provide a biasing force across the overlap section (130), for biasing the cutout (131) toward the neutral state while circumferentially abutting the display device (52).

2. The commercial vehicle (10) according to claim 1, wherein the cutout (131) is provided between the hem (105) and the one or more elastic elements (141).

3. The commercial vehicle (10) according to any preceding claim, wherein the cutout (131) extends from the overlap section (130) towards the first section (110) and/or the second section (120).

4. The commercial vehicle (10) according to any preceding claim, wherein the one or more elastic elements (141) comprises at least one elastic element (141) that extends along on a first side of the curtain (100).

5. The commercial vehicle (10) according to claim 4, wherein the curtain (100) comprises a flap (150) that extends from the first section (110) across the second section (120) and that provides an additional overlap section, and wherein the at least one elastic element (141) is mounted between the flap (150) and the second section (120).

6. The commercial vehicle (10) according to any of claims 4-5, wherein the one or more elastic elements (141) comprises at least one further elastic element (142) that extends along a second side of the curtain (100), opposite the first side.

7. The commercial vehicle (10) according to any preceding claim, wherein the curtain (100) comprises an upper portion (160) and a lower portion (170) that are overlappingly interconnected across the cutout (131) for thereby forming an additional overlap section (135) that extends substantially parallel to the hem (105).

8. The commercial vehicle (10) according to any preceding claim, wherein the overlap section (130) is formed by a pleat of the curtain (100).

9. The commercial vehicle (10) according to any preceding claim, wherein the first (110) and second section (120) are made of a substantially non-elastic fabric.

10. The commercial vehicle (10) according to any preceding claim, wherein, measured from the hem (105), the first section (110) has a first length (L1) and the second section (120) has a second length (L2), wherein the second length (L2) is longer than the first length (LL1).

11. The commercial vehicle (10) according to any preceding claim, wherein the curtain (100) comprises a third section (180) that is connected to the hem (105) and that extends across the first (110) and second section (120).

12. The commercial vehicle (10) according to any of the preceding claims, further comprising a surveillance system (50), wherein the surveillance system (50) comprises one or more camera devices (51), mounted to an exterior side of the cabin (11) and arranged for recording images of an area adjacent to the vehicle, and wherein the display device (52) is arranged for displaying the images recorded by the one or more camera devices (51).

## Patentansprüche

1. Nutzfahrzeug (10), mit einem Vorhang (100), der in einer Kabine (11) des Fahrzeugs aufgehängt ist und zwischen einer geschlossenen Position, in welcher der Vorhang (100) ein Fenster (12) der Kabine verdeckt, und einer offenen Position, in welcher das Fenster (12) im Wesentlichen vom Vorhang (100) frei ist, bewegbar ist;
**dadurch gekennzeichnet, dass** der Vorhang (100) einen ersten Abschnitt (110) und einen zweiten Abschnitt (120) aufweist, die an einem Saum (105) des Vorhangs überlappend miteinander verbunden sind, dadurch einen Überlappungsabschnitt (130) bildend, der sich im Wesentlichen senkrecht zum Saum (105) erstreckt;
wobei der Überlappungsabschnitt (130) einen Ausschnitt (131) aufweist, der dazu dimensioniert ist, sich umlaufend um eine Anzeigevorrichtung (52) zu erstrecken, die in der Nähe des Fensters (12) montiert ist;
wobei der Ausschnitt (131) dazu einstellbar ist, einer Position und Größe der Anzeigevorrichtung (52) zwischen einem neutralen Zustand, in dem ein Bereich des Überlappungsabschnitts (130) maximiert ist, und einem erweiterten Zustand, in dem der Bereich des Überlappungsabschnitts (130) minimiert ist, zu entsprechen;
wobei der Vorhang (100) ein oder mehrere elastische Elemente (141) aufweist, die zwischen dem ersten (110) und dem zweiten Abschnitt (120) montiert und dazu konfiguriert sind, eine Vorspannkraft über den Überlappungsabschnitt (130) bereitzustellen, um den Ausschnitt (131) in Richtung des neutralen Zustands vorzuspannen, während er umlaufend an die Anzeigevorrichtung (52) angrenzt.

2. Nutzfahrzeug (10) nach Patentanspruch 1, wobei der Ausschnitt (131) zwischen dem Saum (105) und dem einen oder mehreren elastischen Elementen (141) bereitgestellt ist.

3. Nutzfahrzeug (10) nach einem der vorhergehenden Patentansprüche, wobei sich der Ausschnitt (131) vom Überlappungsabschnitt (130) in Richtung des ersten Abschnitts (110) und/oder des zweiten Abschnitts (120) erstreckt.

4. Nutzfahrzeug (10) nach einem der vorhergehenden Patentansprüche, wobei das eine oder die mehreren elastischen Elemente (141) wenigstens ein elastisches Element (141) aufweisen, das sich entlang einer ersten Seite des Vorhangs (100) erstreckt.

5. Nutzfahrzeug (10) nach Patentanspruch 4, wobei der Vorhang (100) eine Klappe (150) aufweist, die sich vom ersten Abschnitt (110) über den zweiten Abschnitt (120) erstreckt und die einen zusätzlichen Überlappungsabschnitt bereitstellt, und wobei das mindestens eine elastische Element (141) zwischen der Klappe (150) und dem zweiten Abschnitt (120) montiert ist.

6. Nutzfahrzeug (10) nach einem der Patentansprüche 4 bis 5, wobei das eine oder die mehreren elastischen Elemente (141) wenigstens ein weiteres elastisches Element (142) aufweisen, das sich entlang einer zweiten Seite des Vorhangs (100), gegenüber der ersten Seite, erstreckt.

7. Nutzfahrzeug (10) nach einem der vorhergehenden Patentansprüche, wobei der Vorhang (100) einen oberen Abschnitt (160) und einen unteren Abschnitt (170) aufweist, die über den Ausschnitt (131) überlappend miteinander verbunden sind, um dadurch einen zusätzlichen Überlappungsabschnitt (135) zu bilden, der sich im Wesentlichen parallel zum Saum (105) erstreckt.

8. Nutzfahrzeug (10) nach einem der vorhergehenden Patentansprüche, wobei der Überlappungsabschnitt (130) durch eine Falte des Vorhangs (100) gebildet ist.

9. Nutzfahrzeug (10) nach einem der vorhergehenden Patentansprüche, wobei der erste (110) und der zweite Abschnitt (120) aus einem im Wesentlichen nicht elastischen Gewebe bestehen.

10. Nutzfahrzeug (10) nach einem der vorhergehenden Patentansprüche, wobei der erste Abschnitt (110), gemessen vom Saum (105), eine erste Länge (L1) aufweist und der zweite Abschnitt (120) eine zweite Länge (L2) aufweist, wobei die zweite Länge (L2) länger als die erste Länge (L1) ist.

11. Nutzfahrzeug (10) nach einem der vorhergehenden Patentansprüche, wobei der Vorhang (100) einen dritten Abschnitt (180) aufweist, der mit dem Saum (105) verbunden ist und sich über den ersten (110) und zweiten Abschnitt (120) erstreckt.

12. Nutzfahrzeug (10) nach einem der vorhergehenden Ansprüche, ferner mit einem Überwachungssystem (50), wobei das Überwachungssystem (50) eine oder mehrere Kameravorrichtungen (51) aufweist, die an einer Außenseite der Kabine (11) montiert sind und zum Aufnehmen von Bildern eines an das Fahrzeug angrenzenden Bereichs angeordnet sind, und wobei die Anzeigevorrichtung (52) zum Anzeigen der von der einen oder mehreren Kameravorrichtungen (51) aufgenommenen Bilder angeordnet ist.

## Revendications

1. Véhicule utilitaire (10) comprenant un rideau (100) suspendu à l'intérieur d'une cabine (11) du véhicule et mobile entre une position fermée, dans laquelle le rideau (100) occulte une fenêtre (12) de la cabine, et une position ouverte, dans laquelle la fenêtre (12) est sensiblement dégagée du rideau (100) ;
**caractérisé en ce que** le rideau (100) comprend une première section (110) et une deuxième section (120) qui sont interconnectées, de manière chevauchante, au niveau d'un ourlet (105) du rideau, formant ainsi une section de chevauchement (130) qui s'étend sensiblement de manière perpendiculaire par rapport à l'ourlet (105) ;
dans lequel la section de chevauchement (130) comprend une découpe (131) dimensionnée pour s'étendre, de manière circonférentielle, autour d'un dispositif d'affichage (52) monté à proximité de la fenêtre (12) ;
dans lequel la découpe (131) est réglable pour correspondre à une position et une taille du dispositif d'affichage (52) entre un état neutre, dans lequel une zone de la section de chevauchement (130) est maximisée, et un état étendu, dans lequel la zone de la section de chevauchement (130) est minimisée ;
dans lequel le rideau (100) comprend un ou plusieurs éléments élastiques (141) montés entre la première (110) et la deuxième section (120) et configurés pour fournir une force de sollicitation sur la section de chevauchement (130), pour solliciter la découpe (131) vers l'état neutre tout en venant en butée, de manière circonférentielle, contre le dispositif d'affichage (52).

2. Véhicule utilitaire (10) selon la revendication 1, dans lequel la découpe (131) est prévue entre l'ourlet (105) et les un ou plusieurs éléments élastiques (141).

3. Véhicule utilitaire (10) selon l'une quelconque des revendications précédentes, dans lequel la découpe (131) s'étend à partir de la section de chevauchement (130) vers la première section (110) et/ou la deuxième section (120).

4. Véhicule utilitaire (10) selon l'une quelconque des revendications précédentes, dans lequel les un ou plusieurs éléments élastiques (141) comprennent au moins un élément élastique (141) qui s'étend le long d'un premier côté du rideau (100).

5. Véhicule utilitaire (10) selon la revendication 4, dans lequel le rideau (100) comprend un rabat (150) qui s'étend à partir de la première section (110) sur la deuxième section (120) et qui fournit une section de chevauchement supplémentaire et dans lequel le au moins un élément élastique (141) est monté entre le rabat (150) et la deuxième section (120).

6. Véhicule utilitaire (10) selon l'une quelconque des revendications 4 à 5, dans lequel les un ou plusieurs éléments élastiques (141) comprennent au moins un autre élément élastique (142) qui s'étend le long d'un deuxième côté du rideau (100), opposé au premier côté.

7. Véhicule utilitaire (10) selon l'une quelconque des revendications précédentes, dans lequel le rideau (100) comprend une partie supérieure (160) et une partie inférieure (170) qui sont interconnectées, de manière chevauchante, sur la découpe (131) pour former ainsi une section de chevauchement supplémentaire (135) qui s'étend sensiblement parallèlement à l'ourlet (105).

8. Véhicule utilitaire (10) selon l'une quelconque des revendications précédentes, dans lequel la section de chevauchement (130) est formée par un pli du rideau (100).

9. Véhicule utilitaire (10) selon l'une quelconque des revendications précédentes, dans lequel la première (110) et la deuxième section (120) sont réalisées avec un tissu sensiblement non élastique.

10. Véhicule utilitaire (10) selon l'une quelconque des revendications précédentes, dans lequel, mesurée à partir de l'ourlet (105), la première section (110) a une première longueur (L1) et la deuxième section (120) a une deuxième longueur (L2), dans lequel la deuxième longueur (L2) est plus longue que la première longueur (L1).

11. Véhicule utilitaire (10) selon l'une quelconque des revendications précédentes, dans lequel le rideau (100) comprend une troisième section (180) qui est raccordée à l'ourlet (105) et qui s'étend sur la première (110) et la deuxième section (120).

12. Véhicule utilitaire (10) selon l'une quelconque des revendications précédentes, comprenant en outre un système de surveillance (50), dans lequel le système de surveillance (50) comprend un ou plusieurs dispositifs de caméra (51), montés sur un côté extérieur de la cabine (11) et agencés pour enregistrer des images d'une zone adjacente au véhicule, et dans lequel le dispositif d'affichage (52) est agencé pour afficher les images enregistrées par les un ou plusieurs dispositifs de caméra (51).
